# EUROPEAN PATENT APPLICATION

(11) **EP 4 650 009 A1**
(43) Date of publication of application: **19.11.2025**
(21) Application number: 25175800.9
(22) Date of filing: 12.05.2025
(51) Int. Cl.: A62C 3/16

(54) **FIRE EXTINGUISHING SHEET, BATTERY MODULE, AND BATTERY PACK**

(30) Priority: 13.05.2024 KR 20240062591
(71) Applicant: SAMSUNG SDI CO., LTD., Yongin-si, Gyeonggi-do 17084 (KR)
(72) Inventor: JUNG, Jung Kyun, 16678 Suwon-si (KR); JEON, Jee Hoon, 16678 Suwon-si (KR); YOON, Gwang Taek, 16678 Suwon-si (KR); JI, Tae Ho, 16678 Suwon-si (KR)
(74) Representative: Marks & Clerk LLP

(57) **Abstract**

A fire extinguishing sheet, a battery module, and a battery pack are disclosed. The fire extinguishing sheet includes a fire extinguishing layer that includes a solid aerosol and is configured to release the solid aerosol at temperatures above a reference temperature.

## Description

### BACKGROUND

### 1. Field

Aspects of embodiments according to the present invention relate to a fire extinguishing sheet, a battery module, and a battery pack.

### 2. Description of the Related Art

Recently, with the rapid spread of electronic devices that use batteries, such as mobile phones, notebook computers, and electric vehicles, the demand for secondary batteries with high energy density and high capacity has rapidly increased. Accordingly, research and development to improve the performance of lithium secondary batteries are being actively conducted.

The lithium secondary batteries are batteries including a positive electrode and a negative electrode, each of which includes an active material capable of intercalation and deintercalation of lithium ions, and an electrolyte, and generate electric energy through an oxidation-reduction reaction occurring when lithium ions are intercalated/deintercalated into/from the positive electrode and the negative electrode.

In this case, the lithium secondary batteries include an electrolyte, which is a liquid electrolyte, to improve charge and discharge efficiency. As the electrolyte, for example, an organic liquid electrolyte may be used. However, the electrolyte has a risk of ignition due to its high reactivity. Further, the risk of such ignition is greater due to the highly reactive and temperature-sensitive nature of lithium secondary batteries.

Meanwhile, as interest in the environment has grown recently, fields to which lithium secondary batteries are applied are increasing. The lithium secondary batteries are required to deliver high performance with high energy density and high power. In order to deliver high performance, there is an increasing use of the lithium secondary batteries not as individual cells, but as a battery module or battery pack including a plurality of battery cells.

However, in this case, a problem may occur in which ignition or temperature rise of one battery cell causes other battery cells adjacent to the battery cell to ignite or rise in temperature.

### SUMMARY

According to an aspect of one or more embodiments, a fire extinguishing sheet in a thin-sheet form is provided.

According to another aspect of one or more embodiments, flames generated from a battery cell may be blocked from being exposed to the outside of a battery module and/or a battery pack.

According to another aspect of one or more embodiments, flames or heat generated from one battery cell may be prevented from propagating toward other battery cells.

According to another aspect of one or more embodiments, a chain reaction of ignition occurring inside a battery module and/or a battery pack may be blocked.

However, aspects and problems to be solved by the present invention are not limited to the above-mentioned aspects and problems, and other aspects and problems not mentioned may be clearly understood by those skilled in the art from the following description.

According to an aspect of the present invention, a fire extinguishing sheet includes a fire extinguishing layer that includes a solid aerosol and is configured to release the solid aerosol at temperatures above a reference temperature (e.g., a predetermined temperature).

The reference temperature may be at least 250 °C.

The fire extinguishing layer may comprise a potassium compound and may be configured to release the potassium compound at temperatures above the reference temperature.

The potassium compound may comprise at least one selected from the group consisting of potassium nitrate (KNO3), potassium chlorate (KClO3), potassium perchlorate (KClO4), potassium silicate (K2SiO3), potassium sulfate (K2SO4), potassium carbonate (K2CO3), and a mixture thereof.

The fire extinguishing layer may comprise potassium nitrate (KNO3) and potassium perchlorate (KClO4) in a composition ratio of 1:1 to 1:5.

The fire extinguishing layer may further comprise a catalyst configured to promote the release of the solid aerosol.

The fire extinguishing layer may further comprise a coolant configured to cool the solid aerosol.

The fire extinguishing layer may further comprise an adhesive layer on at least one surface of the fire extinguishing layer.

The fire extinguishing sheet may further comprise an adhesive layer on at least one surface of the fire extinguishing sheet and is configured to attach the fire extinguishing sheet to at least a portion of an inner surface of the housing.

The fire extinguishing sheet may further comprise a protective layer on at least one side of an outer periphery of the fire extinguishing layer.

According to another aspect of the present invention, a battery module includes a plurality of battery cells, a housing configured to accommodate the plurality of battery cells, and a fire extinguishing sheet in at least a portion inside the housing and configured to release a solid aerosol at temperatures above a reference temperature (e.g., a predetermined temperature).

The reference temperature may be at least 250 °C.

The fire extinguishing layer may comprise a potassium compound and may be configured to release the potassium compound at temperatures above the reference temperature.

The fire extinguishing layer may comprise potassium nitrate (KNO3) and potassium perchlorate (KClO4) in a composition ratio of 1:1 to 1:5.

The fire extinguishing layer may further comprise an adhesive layer on at least one surface of the fire extinguishing layer.

According to another aspect of the present invention, a battery pack includes a plurality of the battery modules, and a pack case in which the battery modules are accommodated.

At least some of the above and other features of the invention are set out in the claims.

### BRIEF DESCRIPTION OF THE DRAWINGS

The following drawings accompanying the present specification illustrate some example embodiments of the present invention, and are provided for further understanding of the technical scope of the present invention together with the detailed description of the present invention to be described later; however, the present invention should not be construed as being limited to details shown in the accompanying drawings, in which:
FIGS. 1 to 4 are views each schematically illustrating a lithium secondary battery according to an embodiment;
FIG. 5 is a view illustrating a battery module according to an embodiment;
FIG. 6 is a view schematically illustrating a plurality of battery cells included in the battery module;
FIG. 7 is a view schematically illustrating a fire extinguishing sheet according to an embodiment;
FIG. 8A to FIG. 8C are views schematically illustrating the fire extinguishing sheet according to some embodiments;
FIG. 9 is a view illustrating a battery pack according to an embodiment;
FIG. 10 is a view illustrating the battery pack according to an embodiment;
FIG. 11 is a view schematically illustrating a battery module to which the fire extinguishing sheet according to an embodiment is applied;
FIG. 12 is a view schematically illustrating a battery module for describing FIGS. 13 and 14;
FIG. 13 is a graph illustrating temperature changes in a plurality of battery cells included in the battery module, when a fire occurs in the battery cells;
FIG. 14 is a graph illustrating temperature changes in the plurality of battery cells included in the battery module according to an embodiment, when a fire occurs in the battery cell; and
FIG. 15 is a view illustrating a vehicle body and vehicle body parts according to an embodiment.

### DETAILED DESCRIPTION

Herein, some example embodiments of the present invention will be described in further detail. However, these are presented as examples, and the present invention is not limited thereby, and the present invention is defined by the scope of the claims.

Unless otherwise specified herein, when a part such as a layer, a film, an area, or a plate is described as being "on" another part, this includes not only a case in which the part is "directly on" another part, but also a case in which one or more other parts are present therebetween.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Unless otherwise specified herein, a singular expression may also include a plural meaning. In addition, unless otherwise specified, "A or B" may mean "including A, including B, or including A and B."

As used herein, "a combination thereof" may mean a mixture, a laminate, a composite, a copolymer, an alloy, a blend, a reaction product, and the like of components.

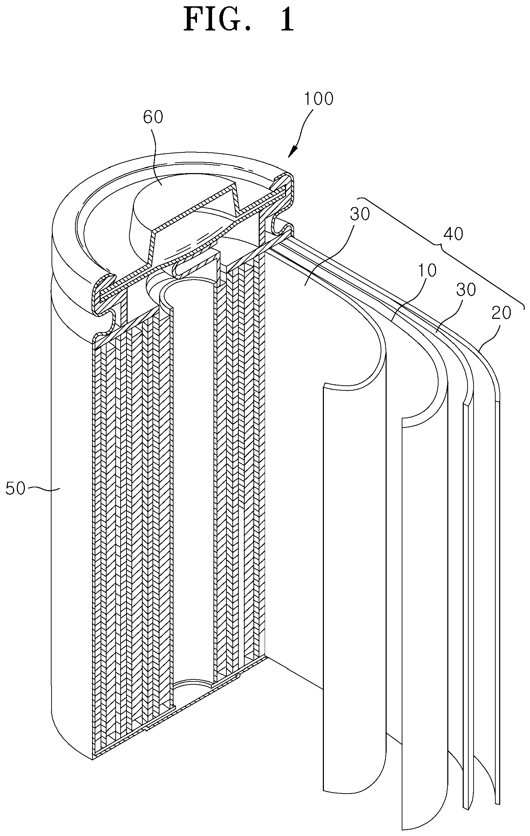

FIGS. 1 to 4 are views each schematically illustrating a lithium secondary battery 100 according to an embodiment.

### Lithium secondary battery

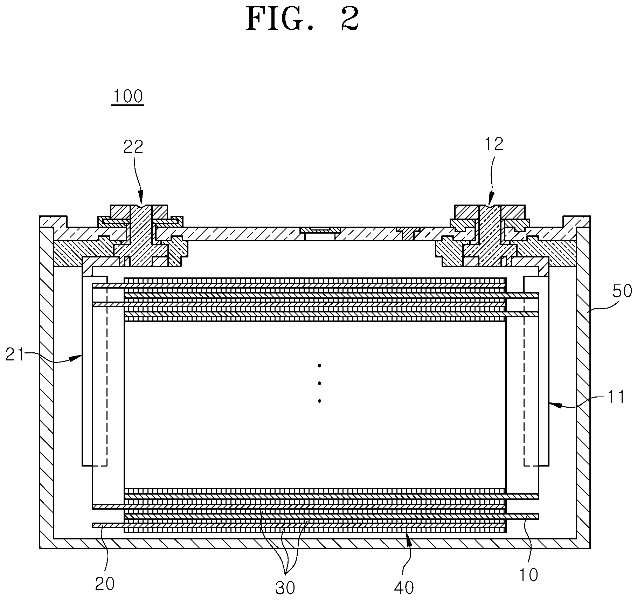

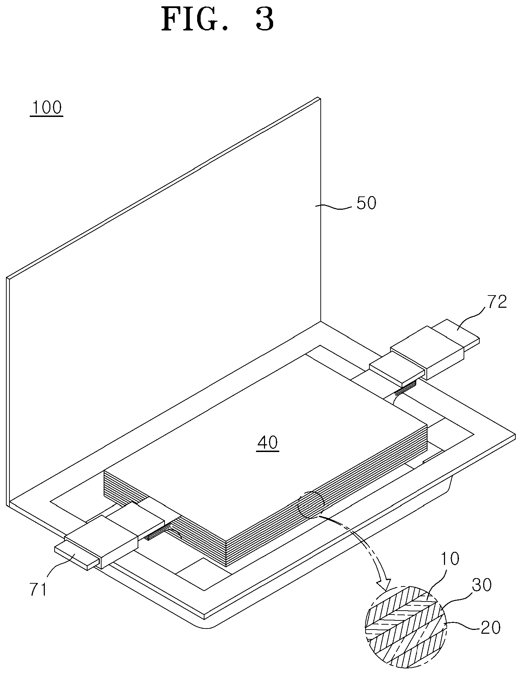

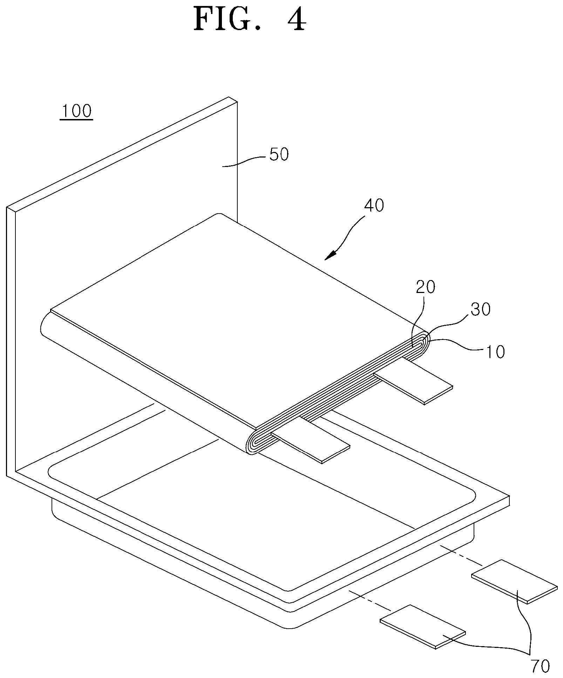

The secondary battery (e.g., a lithium secondary battery) 100 may be classified as any of cylindrical, prismatic, pouch-type, and coin-type batteries, according to a shape thereof. FIGS. 1 to 4 are schematic views each illustrating the lithium secondary battery 100 according to an embodiment, where FIG. 1 illustrates a cylindrical battery 100, FIG. 2 illustrates a prismatic battery 100, and FIGS. 3 and 4 illustrate pouch-type batteries 100. Referring to FIGS 1 to 4, the lithium secondary battery 100 may include an electrode assembly 40 including a separator 30 interposed between a positive electrode 10 and a negative electrode 20, and a case 50 in which the electrode assembly 40 is housed, or accommodated. The positive electrode 10, the negative electrode 20, and the separator 30 may be impregnated with an electrolyte (not shown). As shown in FIG. 1, the lithium secondary battery 100 may include a sealing member 60 that seals the case 50. In an embodiment, as shown in FIG. 2, the lithium secondary battery 100 may include a positive electrode lead tab 11, a positive electrode terminal 12, a negative electrode lead tab 21, and a negative electrode terminal 22. As shown in FIGS. 3 and 4, the lithium secondary battery 100 may include electrode tabs 70, that is, a positive electrode tab 71 and a negative electrode tab 72, which function as electrical paths for inducing a current formed in the electrode assembly 40 to the outside.

### Positive electrode active material

As a positive electrode active material, a compound (lithiated intercalation compound) that is capable of reversible intercalation and deintercalation of lithium may be used. In an embodiment, one or more of a composite oxide of lithium and a metal selected from cobalt, manganese, nickel, and a combination thereof may be used.

The composite oxide may be a lithium-transition metal compound (e.g., lithium-transition metal composite oxide), and some examples thereof may include lithium nickel-based oxide, lithium cobalt-based oxide, lithium manganese-based oxide, lithium iron phosphate-based compound, cobalt-free nickel-manganese-based oxide, or a combination thereof.

As an example, compounds represented by any of the following chemical formulas may be used. LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); or LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare-earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may be a high-nickel-based positive electrode active material having a nickel content of greater than or equal to 80 mol %, greater than or equal to 85 mol %, greater than or equal to 90 mol %, greater than or equal to 91 mol %, or greater than or equal to 94 mol % and less than or equal to 99 mol % based on 100 mol % of the metal excluding lithium in the lithium-transition metal composite oxide (high-nickel-based positive electrode active material). The high-nickel-based positive electrode active material may be capable of realizing high capacity and can be applied to high-capacity and high-density lithium secondary batteries.

### Positive electrode

The positive electrode 10 for the lithium secondary battery 100 may include a positive electrode current collector and a positive electrode active material layer formed on the positive electrode current collector. The positive electrode active material layer includes a positive electrode active material and may further include a binder and/or a conductive material.

As an example, the positive electrode may further include a component that can function as a sacrificial positive electrode.

In an embodiment, a content of the positive electrode active material may be 90 wt% to 99.5 wt% based on 100 wt% of the positive electrode active material layer, and a content of each of the binder and the conductive material may be 0.5 wt% to 5 wt% based on 100 wt% of the positive electrode active material layer.

The binder well adheres positive electrode active material particles to each other and also well adheres the positive electrode active material to the positive electrode current collector.

Representative examples of the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polyethylene, polypropylene, styrene-butadiene rubber, (meth)acrylated styrene-butadiene rubber, an epoxy resin, a (meth)acrylic resin, a polyester resin, nylon, or the like, but the present invention is not limited thereto.

In an embodiment, the binder may include any material that can be fiberized by shear force. For example, the binder includes polytetrafluoroethylene (PTFE), polyvinylidene fluoride (PVDF), a vinylidene fluoride-hexafluoropropylene copolymer, polyacrylonitrile, polyolefin, or a mixture thereof.

The conductive material provides conductivity to the electrode, and any suitable material that does not cause a chemical change and is electrically conductive may be used in the configured battery. Some examples of the conductive material may include a carbon-based material, such as natural graphite, artificial graphite, carbon black, acetylene black, Ketjen black, carbon fibers, carbon nanofibers, or carbon nanotubes; a metal-based material in the form of a metal powder or metal fiber including copper, nickel, aluminum, silver, or the like; a conductive polymer, such as a polyphenylene derivative; or a mixture thereof.

Al foil may be used as the positive electrode current collector, but the present invention is not limited thereto.

### Negative electrode active material

A negative electrode active material may include a material capable of reversible intercalation and deintercalation of lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite, such as amorphous, plate shape, flake, spherical shape or fiber-shaped natural graphite or artificial graphite. Examples of the amorphous carbon may include soft carbon or hard carbon, a mesophase pitch carbonized product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOx (0 < x ≤ 2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may be Sn, SnOₖ (0<k≤2, e.g., SnO₂), a Sn-based alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon protective layer (shell) located on the surface of the secondary particle. The amorphous carbon may be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon protective layer located on the surface of the core.

The Si-based negative electrode active material or the Sn-based negative electrode active material may be used by being mixed with a carbon-based negative electrode active material.

### Negative electrode

The negative electrode 20 for the lithium secondary battery 100 includes a negative electrode current collector and a negative electrode active material layer located on the negative electrode current collector. The negative electrode active material layer includes a negative electrode active material and may further include a binder and/or a conductive material.

In an embodiment, for example, the negative electrode active material layer may include 90 wt% to 99.5 wt% of the negative electrode active material, 0.5 wt% to 5 wt% of the binder, and 0 wt% to 5 wt% of the conductive material based on 100 wt% of the negative electrode active material layer.

The binder well adheres negative electrode active material particles to each other and also well adheres the negative electrode active material to the negative electrode current collector. A non-aqueous binder, an aqueous binder, a dry binder, or a combination thereof may be used as the binder.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the binder in the negative electrode active material layer, a cellulose-based compound capable of imparting viscosity may be further included. As the cellulose-based compound, one or more of carboxymethyl cellulose, hydroxypropylmethyl cellulose, methyl cellulose, and alkali metal salts thereof may be used in combination. In an embodiment, Na, K, or Li may be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The conductive material provides conductivity to the electrode, and any suitable material that does not cause a chemical change and is electrically conductive may be used in the configured battery. Some examples of the conductive material may include a carbon-based material, such as natural graphite, artificial graphite, carbon black, acetylene black, Ketjen black, carbon fibers, or carbon nanofibers; a metal-based material in the form of a metal powder or metal fiber including copper, nickel, aluminum, silver, or the like; a conductive polymer, such as a polyphenylene derivative; or a mixture thereof.

In an embodiment, the negative electrode current collector may be selected from a copper foil, a nickel foil, a stainless steel foil, a titanium foil, a nickel foam, a copper foam, a polymer substrate coated with a conductive metal, and a combination thereof.

### Electrolyte (not shown)

The electrolyte for the lithium secondary battery 100 includes a non-aqueous organic solvent and a lithium salt.

The non-aqueous organic solvent serves as a medium through which ions taking part in the electrochemical reaction of a battery can move.

The non-aqueous organic solvent may include a carbonate-based solvent, an ester-based, and ether-based, a ketone-based, an alcohol-based solvent, aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, and valerolactone.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvent may include ethyl alcohol, isopropyl alcohol, and the like, and the aprotic solvent may include nitriles such as R-CN (where R is a C2 to C20 linear, branched, or cyclic hydrocarbon group and may include a double bond, an aromatic ring, or an ether bond), and the like; amides such as dimethyl formamide; dioxolanes such as 1,3-dioxolane and 1,4-dioxolane; sulfolanes; and the like.

The non-aqueous organic solvents may be used alone or in combination of two or more.

In an embodiment, if a carbonate-based solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in the non-aqueous organic solvent and functions as a source of lithium ions in a battery, enables a basic operation of a lithium secondary battery, and improves movement of the lithium ions between positive and negative electrodes. Representative examples of the lithium salt may include one or two or more selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where, x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

### Separator

Depending on a type of the lithium secondary battery 100, the separator 30 may be present between the positive electrode 10 and the negative electrode 20. In an embodiment, the separator 30 may include polyethylene, polypropylene, polyvinylidene fluoride, or a multilayer film of two or more layers thereof such as a polyethylene/polypropylene two-layer separator, a polyethylene/polypropylene/polyethylene three-layer separator, a polypropylene/polyethylene/polypropylene three-layer separator, or the like.

The separator 30 may include a porous substrate and a protective layer including an organic material, an inorganic material, or a combination thereof located on one surface or both, or opposite, surfaces of the porous substrate.

The porous substrate may be a polymer film formed of a polymer, or a copolymer or a mixture of two or more selected from polyolefins, such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, a glass fiber, and polytetrafluoroethylene (e.g., Teflon).

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic and inorganic materials may be present by being mixed in one protective layer or may be present in a form in which a protective layer including organic materials and a protective layer including inorganic materials are stacked.

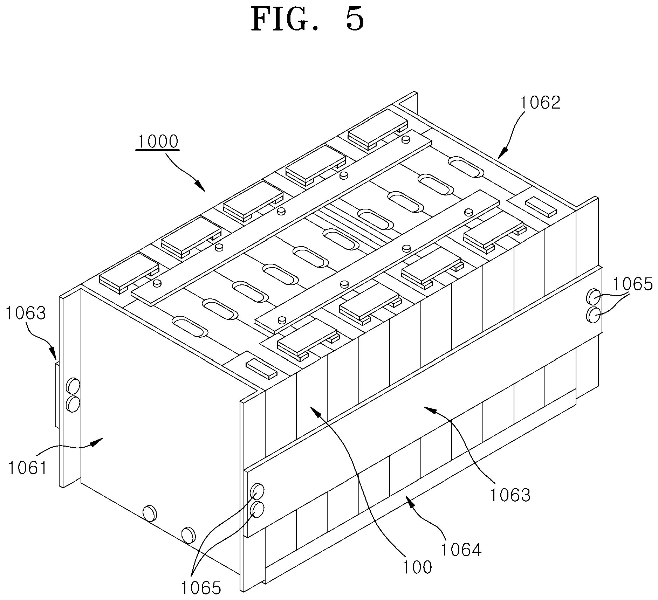

FIG. 5 is a view illustrating a battery module according to an embodiment.

Referring to FIG. 5, a battery module 1000 according to an embodiment of the present invention includes a plurality of battery cells 100 arranged in a direction (e.g., including the secondary battery (e.g., lithium secondary battery) 100 described in FIGS. 1 to 4), and a housing 1061, 1062, 1063, and 1064 in which the battery cells 100 are accommodated.

In an embodiment, the housing 1061 to 1064 may include a pair of end plates 1061. 1062 facing a wide surface of the battery cells 100, a side plate 1063 that connects the pair of end plates 1061, 1062, and a bottom plate 1064. The side plate 1063 may support a side surface of each of the battery cells 100, and the bottom plate 1064 may support a bottom surface of each of the battery cells 100. In an embodiment, the pair of end plates 1061, 1062, the side plate 1063, and the bottom plate 1064 may be connected to each other by members, such as bolts 1065, and the like.

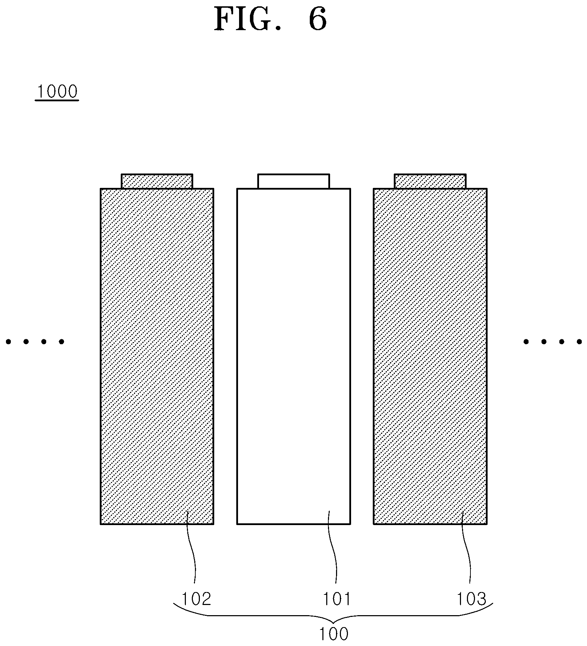

FIG. 6 is a view schematically illustrating a plurality of battery cells 100 included in the battery module 1000.

As described in FIG. 5, the battery module 1000 according to an embodiment includes a plurality of battery cells 100.

The plurality of battery cells 100 include, for example, a first battery cell 101, a second battery cell 102, and a third battery cell 103. The first battery cell 101 may be disposed adjacent to the second battery cell 102 on a side, and may be disposed adjacent to the third battery cell 103 on another side. That is, the second battery cell 102, the first battery cell 101, and the third battery cell 103 may be disposed side-by-side in sequence.

For example, the first battery cell 101 may ignite due to a rise in temperature inside the first battery cell 101 and/or an external impact. For example, flames may be generated from the first battery cell 101.

The flames generated from the first battery cell 101 may propagate to the second battery cell 102 and/or the third battery cell 103 located adjacent to the first battery cell 101. For example, high temperature heat generated from the first battery cell 101 may propagate toward the second battery cell 102 and/or the third battery cell 103.

Accordingly, even if flames and/or high temperature heat are generated only in the first battery cell 101, which is one battery cell 100, flames and/or high temperature heat may be generated in a plurality of battery cells (e.g., cell 102 and cell 103). In this case, flames may be consecutively generated from the plurality of battery cells 100 included in the battery module 1000.

Accordingly, it is desirable to prevent or substantially prevent flames and/or high temperature heat generated from one battery cell from propagating toward adjacent battery cells. Further, it is desirable to prevent or substantially prevent flames from being exposed to the outside of the battery module 1000 even if the flames are generated from the battery module 1000. Herein, a fire extinguishing sheet according to an embodiment will be described as a solution.

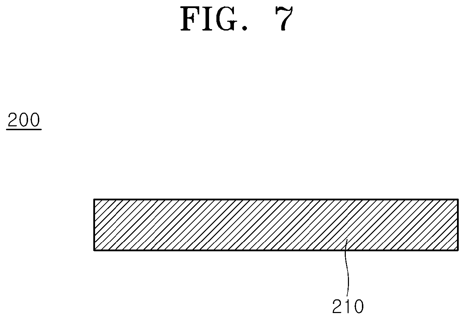

FIG. 7 is a view schematically illustrating a fire extinguishing sheet 200 according to an embodiment.

The fire extinguishing sheet 200 according to an embodiment is provided inside the battery module 1000 (e.g., the battery module described in FIGS. 5 and 6). In an embodiment, as described above, the battery module 1000 includes the plurality of battery cells 100 and the housing 1061 to 1065 in which the plurality of battery cells 100 are accommodated.

The fire extinguishing sheet 200 is provided in at least a portion inside the housing 1061 to 1064. In an embodiment, for example, the fire extinguishing sheet 200 is provided on at least one of upper, lower, and side inner surfaces of the housing 1061 to 1064. In an embodiment, for example, the fire extinguishing sheet 200 is provided between the battery cells 100 and at least one of the upper, lower, and side inner surfaces of the housing 1061 to 1064. In an embodiment, for example, the fire extinguishing sheet 200 is provided between at least some of the plurality of battery cells 100. In an embodiment, for example, the fire extinguishing sheet 200 is attached to an upper vent and/or a lower vent of the battery cell 100.

The fire extinguishing sheet 200 may prevent or substantially prevent flames generated inside the battery module 1000 from being exposed to the outside. The fire extinguishing sheet 200 may delay a time for the flames generated inside the battery module 1000 to be exposed to the outside. The fire extinguishing sheet 200 may reduce the size of the flames generated inside the battery module 1000.

The fire extinguishing sheet 200 may prevent or substantially prevent heat propagation at temperatures above a certain, or reference, temperature (e.g., a predetermined temperature). For example, the fire extinguishing sheet 200 may lower surrounding oxygen concentration if the temperature is greater than or equal to the reference temperature. Through this, the fire extinguishing sheet 200 can extinguish the flames, reduce the size of the flames, and/or prevent or substantially prevent the flames from being released internally and externally.

Here, the term "surrounding" refers to, for example, a space of a size that can be covered by a fire extinguishing sheet 200. For example, the term "surrounding" refers to a space inside the battery module 1000 to which the fire extinguishing sheet 200 is attached. In an embodiment, for example, the fire extinguishing sheet 200 is formed at a minimum of 0.1 g/liter per effective volume. For example, one or a plurality of fire extinguishing sheets 200 are attached inside the battery module 1000 to meet capacity requirements per unit area. For example, the space that can be covered by the fire extinguishing sheet 200 is determined according to a capacity per unit area of the fire extinguishing sheet 200.

In an embodiment, the fire extinguishing sheet 200 includes a fire extinguishing layer 210.

The fire extinguishing layer 210 includes a solid aerosol. An aerosol is a state in which solid or liquid particles are suspended in a gas. A solid aerosol is a state in which solid particles are suspended in a gas. In an embodiment, the fire extinguishing layer 210 includes a solid aerosol.

The fire extinguishing layer 210 self-ignites at temperatures above a certain, or reference, temperature (e.g., a predetermined temperature). Accordingly, the fire extinguishing layer 210 releases the solid aerosol at temperatures above the reference temperature.

The solid aerosol lowers oxygen concentration around the fire extinguishing sheet 200. Through this, the solid aerosol can prevent or substantially prevent the flames around the fire extinguishing sheet 200 from moving and/or expanding. In addition, through this, the solid aerosol can extinguish the flames or prevent or substantially prevent the flames from propagating.

In an embodiment, the reference temperature is greater than or equal to 250 °C. In an embodiment, for example, the predetermined temperature is greater than or equal to 250 °C and less than 300 °C. If the fire extinguishing layer 210 self-ignites if the predetermined temperature is less than 250 °C, there is a risk that the fire extinguishing layer 210 may self-ignite even during a performance test of the battery module 1000. In addition, if the fire extinguishing layer 210 self-ignites if the predetermined temperature is greater than or equal to 300 °C, there is a risk that all or most of the battery module 1000 may be burned out before the fire extinguishing sheet 200 activates.

By releasing the solid aerosol at temperatures above the reference temperature, the fire extinguishing layer 210 may self-activate at a point at which flame suppression is desired, even without a separate sensor. For example, in a case in which the fire extinguishing layer 210 is activated by the sensor, if the sensor malfunctions, the fire extinguishing layer 210 may not perform fire extinguishing at the desired time. However, the fire extinguishing sheet 200 according to an embodiment can prevent or substantially prevent this problem in advance by allowing the fire extinguishing layer 210 to autonomously perform fire extinguishing at temperatures above the reference temperature. As described above, the fire extinguishing sheet 200 can reduce the oxygen concentration inside the sealed battery module 1000 through self-ignition, thereby lowering the ambient temperature and breaking a chain reaction of ignition.

In an embodiment, the solid aerosol includes a potassium compound to self-ignite at the reference temperature. Accordingly, the fire extinguishing layer 210 may release the potassium compound at temperatures above the reference temperature. For example, the fire extinguishing layer 210 may release potassium ions(potassium radicals) while igniting at temperatures above the reference temperature.

In an embodiment, the potassium compound is at least one selected from the group consisting of, for example, potassium nitrate (KNO₃), potassium chlorate (KClO₃), potassium perchlorate (KClO₄), potassium silicate (K₂SiO₃), potassium sulfate (K₂SO₄), potassium carbonate (K₂CO₃).

The mixture thereof is, for example, a mixture of potassium nitrate (KNO₃) and potassium perchlorate (KClO₄). For example, the potassium perchlorate (KClO₄) may be thermally decomposed to produce potassium radicals, which can enhance the extinguishing power of the potassium nitrate (KNO₃).

In an embodiment, for example, the fire extinguishing layer 210 includes a mixture of potassium nitrate (KNO₃) and potassium perchlorate (KClO₄) in a weight ratio of 1:1 to 1:5. In an embodiment, for example, the fire extinguishing layer 210 includes a mixture of potassium nitrate (KNO₃) and potassium perchlorate (KClO₄) in a weight ratio of 1:1 to 1:4. In an embodiment, for example, the fire extinguishing layer 210 includes a mixture of potassium nitrate (KNO₃) and potassium perchlorate (KClO₄) in a weight ratio of 1:1 to 1:3. In an embodiment, for example, the fire extinguishing layer 210 includes a mixture of potassium nitrate (KNO₃) and potassium perchlorate (KClO₄) in a weight ratio of 1:1 to 1:2. In an embodiment, for example, the fire extinguishing layer 210 includes a mixture of potassium nitrate (KNO₃) and potassium perchlorate (KClO₄) in a weight ratio of 1:1 to 1:1.

Through this, the fire extinguishing sheet 200 according to an embodiment releases the potassium element (K), which is a fire extinguishing agent, at temperatures above the reference temperature. The released potassium element fuses with O, H, and OH inside and outside the battery module 1000. Through this, the potassium (potassium ions or potassium radicals) may break the chain reaction of ignition that would otherwise continue combustion of the flames and extinguish the flames.

In an embodiment, the fire extinguishing layer 210 may further include a catalyst that promotes the release of the solid aerosol at temperatures above the reference temperature. The catalyst improves the extinguishing power of the fire extinguishing sheet 200 and, for example, promotes the release of the potassium. The catalyst includes, for example, at least one of iron oxide and KMnO₄. The iron oxide includes at least one of ferrous(iron(ll)) oxide (FeO), ferric(iron(III)) oxide (Fe₂O₃), and ferroferric(iron(II,III)) oxide (Fe₃O₄).

In an embodiment, the fire extinguishing layer 210 may further include at least one of an epoxy resin, a surfactant, carbon, and a curing agent to better maintain a solid form even without being placed in a separate container. For example, the fire extinguishing layer 210 may be formed by mixing a solid aerosol with at least one of an epoxy resin, a surfactant, carbon, and a curing agent.

In an embodiment, the fire extinguishing layer 210 may further include a coolant that cools the solid aerosol that has self-ignited. The coolant can lower the temperature inside the battery module 1000 by dissipating the heat of combustion generated when the solid aerosol is combusted. The coolant includes, for example, at least one of Mg(OH)₂, Na₂CO₃, H₃BO₃, KClO₄, KNO₃, CaCO₄, and alumina ceramic balls.

With this configuration, the fire extinguishing sheet 200 according to an embodiment can maintain a thin sheet form even when not placed in a separate container for storing fire extinguishing agents. In addition, the fire extinguishing sheet 200 can self-ignite at an appropriate temperature and extinguish flames, without a separate sensor. Accordingly, the fire extinguishing sheet 200 may provide initial fire suppression. In addition, the fire extinguishing sheet 200 according to an embodiment is small in volume, which may have no spatial constraints during installation.

Further, the fire extinguishing sheet 200 according to an embodiment may be processed into a three-dimensional shape during a drying process after stirring the fire extinguishing agent. As described above, the fire extinguishing sheet 200 can be formed into any suitable shape for spatial arrangement.

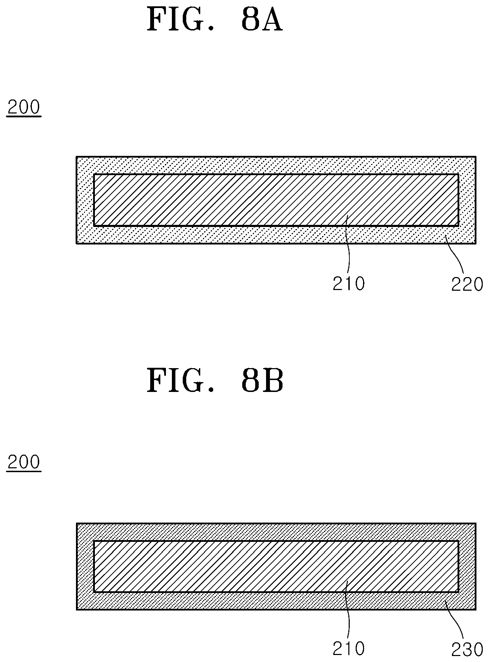

FIG. 8A to FIG. 8C are views schematically illustrating the fire extinguishing sheet 200 according to some embodiments.

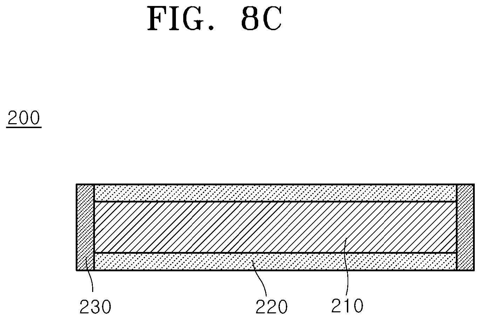

FIGS. 8A, 8B, and 8C show various embodiments in which the fire extinguishing sheet 200 described in FIG. 7 further includes the fire extinguishing layer 210 and separate layers.

FIG. 8A is a view illustrating an example in which the fire extinguishing sheet 200 according to an embodiment includes the fire extinguishing layer 210 and an adhesive layer 220.

The fire extinguishing sheet 200 according to an embodiment may further include the fire extinguishing layer 210 described in FIG. 7 and the adhesive layer 220 provided on at least one surface of the fire extinguishing layer 210.

The adhesive layer 220 includes, for example, an adhesive tape. In an embodiment, the adhesive layer 220 is at least one selected from the group consisting of, for example, a polyurethane adhesive, a polyvinyl alcohol adhesive, and a thermofusible adhesive. In an embodiment, the adhesive layer 220 includes at least one selected from the group consisting of, for example, polyurethane, an epoxy resin, and polyolefin.

In an embodiment, the adhesive layer 220 is formed, for example, to surround the entire surface of the fire extinguishing layer 210, as shown in FIG. 8A. In an embodiment, the adhesive layer 220 is formed, for example, on upper and/or lower surfaces of the fire extinguishing layer 210, unlike what is shown in FIG. 8A. In an embodiment, the adhesive layer 220 is formed, for example, on at least a portion of one surface and/or the other surface (e.g., the upper surface and/or the lower surface) of the fire extinguishing layer 210, unlike what is shown in FIG. 8A.

The adhesive layer 220 allows the fire extinguishing sheet 200 to be attached to at least a portion of the inner surface of the housing 1061 to 1064 of the battery module 1000. In an embodiment, the adhesive layer 220 allows the fire extinguishing sheet 200 to be attached to at least one side of the battery cell 100. That is, the adhesive layer 220 may allow the fire extinguishing sheet 200 to be freely attached and fixed anywhere.

FIG. 8B is a view illustrating an example in which the fire extinguishing sheet 200 according to an embodiment includes the fire extinguishing layer 210 and a protective layer 230.

The fire extinguishing sheet 200 according to an embodiment may further include the fire extinguishing layer 210 described in FIG. 7 and the protective layer 230 provided on at least one surface of the fire extinguishing layer 210.

The protective layer 230 may prevent or substantially prevent dust from being generated from the solid aerosol included in the fire extinguishing layer 210. Through this, the protective layer 230 can further improve the safety of the fire extinguishing sheet 200.

FIG. 8C is a view illustrating an example in which the fire extinguishing sheet 200 according to an embodiment includes the fire extinguishing layer 210, the adhesive layer 220, and the protective layer 230.

The fire extinguishing sheet 200 according to an embodiment may include both the adhesive layer 220 and the protective layer 230 together with the fire extinguishing layer 210. For example, as shown in FIG. 8C, the adhesive layer 220 may be formed on each of upper and lower surfaces of the fire extinguishing layer 210. In an embodiment, for example, the protective layer 230 is formed on at least one side of an outer periphery (or, edge or side surface) of the fire extinguishing layer 210. In an embodiment, for example, unlike what is shown in FIG. 8C, the protective layer 230 may be formed on an entire surface of the fire extinguishing layer 210. Further, for example, the adhesive layer 220 may be formed on the entire surface of the protective layer 230 or on a portion thereof.

With this configuration, the fire extinguishing sheet 200 can have high stability and/or be easily attached anywhere. Herein, an example in which the fire extinguishing sheet 200 described in FIGS. 7 to 8C is applied to the battery module 1000 and/or a battery pack 2000 will be described.

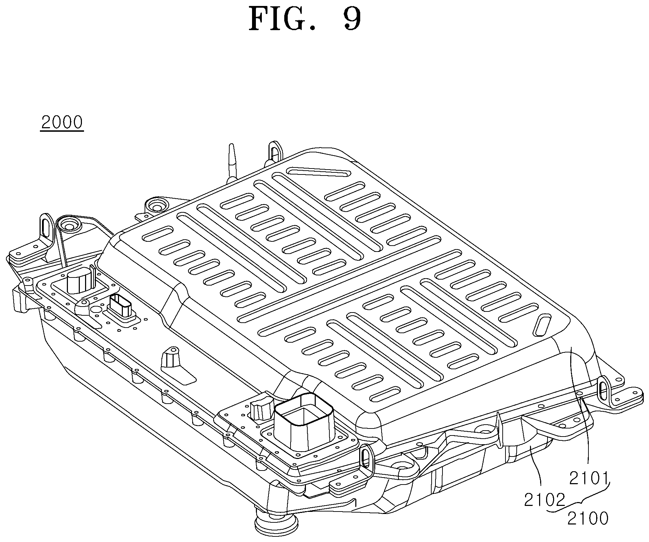

FIG. 9 is a view illustrating a battery pack 2000 according to an embodiment.

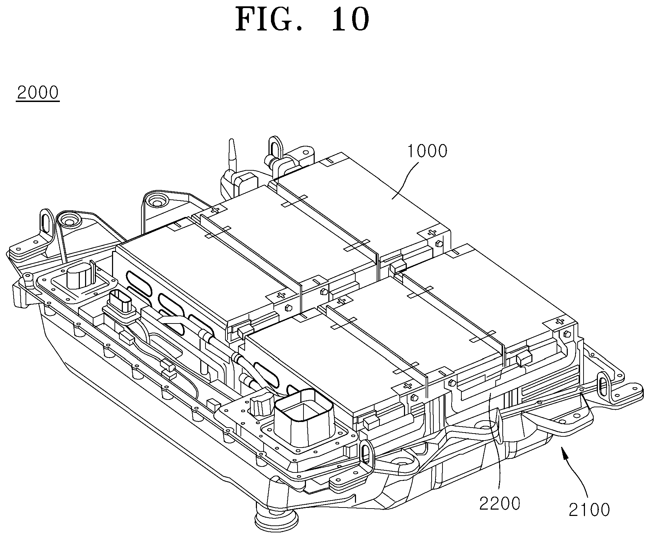

FIG. 10 is a view illustrating the battery pack 2000 according to an embodiment.

The battery pack 2000 according to an embodiment includes an assembly in which individual batteries are electrically connected and a pack case that accommodates the assembly. In the drawings, for convenience of description, parts such as bus bars, cooling units, and external terminals for electrical connection of batteries may be omitted.

The battery pack 2000 may include a plurality of battery modules 1000 (e.g., including the battery module 1000 described in FIGS. 5 to 8) and a pack case 2100 for accommodating the battery modules 1000. For example, the pack case 2100 may include first and second pack cases 2101 and 2102, which are coupled in a facing direction, with the plurality of battery modules 1000 interposed therebetween. The plurality of battery modules 1000 may be electrically connected to each other using a bus bar 2200, and a plurality of battery modules 1000 may be electrically connected to each other in a series/parallel configuration or a mixed series-parallel configuration to obtain a required electrical output.

In FIGS. 7 to 8C, an example in which the fire extinguishing sheet 200 according to an embodiment is applied to the battery module 1000 has been described. The fire extinguishing sheet 200 according to an embodiment may be applied not only to the battery module 1000 but also to the battery pack 2000.

For example, the battery pack 2000 according to an embodiment may include a plurality of battery modules 1000 including the fire extinguishing sheet 200. For example, the battery module 1000 includes the fire extinguishing sheet 200 in at least a portion inside the battery module 1000. The battery pack 2000 may include the battery module 1000 in a plural number.

For example, the battery pack 2000 according to an embodiment may include a plurality of battery modules 1000 and the fire extinguishing sheet 200. For example, the battery pack 2000 may include the plurality of battery modules 1000, the pack case 2100 accommodating the plurality of battery modules 1000, and the fire extinguishing sheet 200 provided in at least a portion inside the pack case 2100. The fire extinguishing sheet 200 is the same or similar to that described with respect to FIGS. 7 to 8C.

For example, the battery pack 2000 according to an embodiment may include a plurality of battery modules 1000 including the fire extinguishing sheet 200, and the fire extinguishing sheet 200. For example, the battery module 1000 includes the fire extinguishing sheet 200 in at least a portion inside the battery module 1000. In an embodiment, the battery pack 2000 may include the battery module 1000 in a plural number. The battery pack 2000 may include the pack case 2100 accommodating the plurality of battery modules 1000 and the fire extinguishing sheet 200 provided in at least a portion inside the pack case 2100 (e.g., on at least a part of the inner surface of the pack case 2100 and/or between adjacent battery cells 100). The fire extinguishing sheet 200 is the same or similar to that provided in FIGS. 7 to 8C.

With this configuration, the battery pack 2000 according to an embodiment can prevent or substantially prevent flames from cascading and/or prevent or substantially prevent the flames from being exposed to the outside, even if the flames are generated from one battery cell 100 and/or one battery module 1000 included in the battery pack 2000.

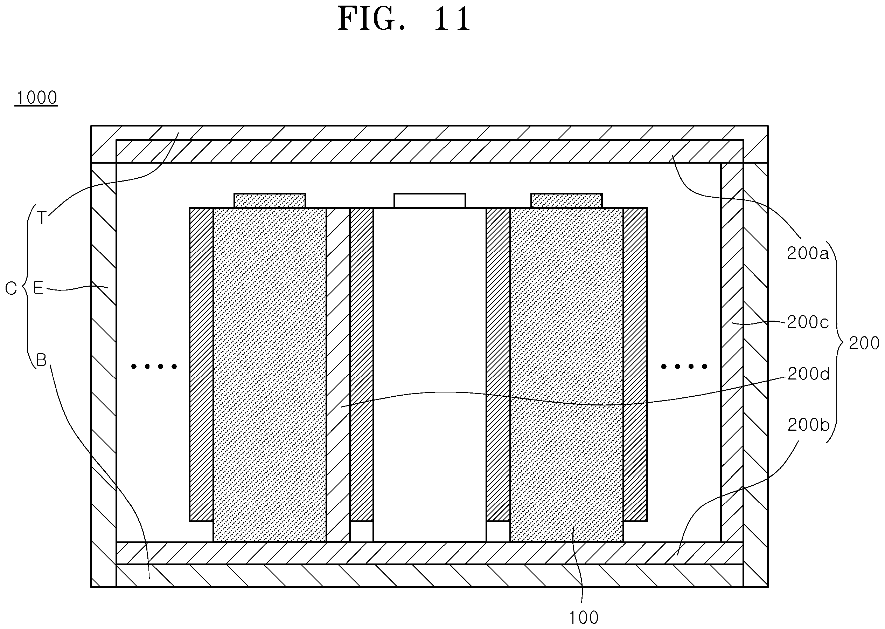

FIG. 11 is a view schematically illustrating a battery module to which the fire extinguishing sheet according to an embodiment is applied.

In FIG. 11, "1000" represents the battery module according to an embodiment. The battery module 1000 includes a plurality of battery cells 100 and a housing C (e.g., including 1061 to 1065 described in FIG. 5) that accommodates the plurality of battery cells 100. In addition, "200" in FIG. 11 represents the fire extinguishing sheet 200 described in FIGS. 7 to 10. Examples of the fire extinguishing sheet 200 being applied to the battery module 1000 will be described with reference to FIG. 11. A fire extinguishing sheet 200 according to an embodiment includes a fire extinguishing sheet 200a, a fire extinguishing sheet 200b, a fire extinguishing sheet 200c, and a fire extinguishing sheet 200d.

The housing C according to an embodiment includes a bottom plate B (e.g., including 1064 described in FIG. 5), end plates E (e.g., including 1061 and 1062 described in FIG. 5), and a top cover T. In an embodiment, although not shown in the drawing, the housing C includes a side plate (e.g., including 1063 described in FIG. 5).

The bottom plate B is located below the plurality of battery cells 100. The bottom plate B supports the plurality of battery cells 100 from below. A cooling plate configured to reduce the temperature of the battery module 1000 may be further provided above or below the bottom plate B.

The end plates E are formed to extend from a first side and a second side of the bottom plate B. For example, the end plates E may be formed perpendicular to the bottom plate B. In an embodiment, the end plates E are composed of two pieces, which face each other and may be spaced apart by a distance equal to a length of the bottom plate B. For example, each of the end plates E may be provided in a direction in which the plurality of battery cells 100 are disposed. For example, two end plates E may be formed to face a wide side surface of the battery cell 100.

The side plate is formed to extend from the bottom plate B. For example, the side plate may be formed perpendicular to the bottom plate B. The side plate is located between the two end plates E. That is, the side plate is also composed of two pieces, which may face each other and may be spaced apart by a distance equal to a width of the bottom plate B. For example, each of the side plates may be provided perpendicular to the direction in which the plurality of battery cells 100 are disposed. For example, two side plates may be formed to face a narrow side surface of the battery cell 100.

The two end plates E and the two side plates may form a side surface of the housing C while surrounding the plurality of battery cells 100 arranged therein.

The top cover T is located above the plurality of battery cells 100. The top cover T is formed opposite to the bottom plate B. The top cover T is coupled to an upper portion of the side surface of the housing C, which is formed by the two end plates E and the two side plates, forming an upper portion of the housing C.

A fire extinguishing sheet 200a according to an embodiment may be provided, for example, below the top cover T. For example, the fire extinguishing sheet 200a may be provided between the top cover T and the plurality of battery cells 100. For example, the fire extinguishing sheet 200a may be provided partially or entirely on a lower surface of the top cover T. In addition, for example, a plurality of fire extinguishing sheets 200a may be provided on the lower surface of the top cover T. The plurality of fire extinguishing sheets 200a may be located spaced apart from each other, or may be located continuously with each other. For example, the plurality of fire extinguishing sheets 200a may be respectively provided at positions corresponding to upper portions of the plurality of battery cells 100. In an embodiment, for example, each of the plurality of fire extinguishing sheets 200a may be provided in a position corresponding to at least a portion of the upper portion of each of the plurality of battery cells 100. Accordingly, the battery module 1000 may include, for example, one fire extinguishing sheet 200a to as many fire extinguishing sheets 200a, which are attached to the top cover T, as a number of the battery cells 100.

In an embodiment, a fire extinguishing sheet 200b may be provided, for example, above the bottom plate B. For example, the fire extinguishing sheet 200b may be provided between the bottom plate B and the plurality of battery cells 100. For example, the fire extinguishing sheet 200b may be provided partially or entirely on an upper surface of the bottom plate B. In an embodiment, for example, a plurality of fire extinguishing sheets 200b may be provided on the upper surface of the bottom plate B. In this case, the plurality of fire extinguishing sheets 200b may be located spaced apart from each other, or may be located continuously with each other. For example, the plurality of fire extinguishing sheets 200b may be respectively provided at positions corresponding to lower portions of the plurality of battery cells 100. In an embodiment, for example, each of the plurality of fire extinguishing sheets 200b may be provided in a position corresponding to at least a portion of the lower portion of each of the plurality of battery cells 100. Accordingly, the battery module 1000 may include, for example, one fire extinguishing sheet 200b to as many fire extinguishing sheets 200b, which are attached to the bottom plate B, as a number of the battery cells 100.

A fire extinguishing sheet 200c according to an embodiment may be provided, for example, on a side of the end plate E or the side plate. For example, the fire extinguishing sheet 200c may be provided between the end plate E and the plurality of battery cells 100. In an embodiment, for example, the fire extinguishing sheet 200c may be provided between the side plate and the plurality of battery cells 100.

A fire extinguishing sheet 200d according to an embodiment may be provided, for example, between the battery cells 100.

The fire extinguishing sheet 200 according to an embodiment may be located using a combination of all or some of the fire extinguishing sheets 200a to 200d.

As described above, the fire extinguishing sheet 200 according to an embodiment may be applied to various positions within the battery module 1000 to prevent or substantially prevent flames from generating/propagating within the battery module 1000.

In FIG. 11, the fire extinguishing sheet 200 has been described using the battery module 1000 as an example, but the fire extinguishing sheet 200 may be applied to the battery pack 2000 in a same or similar manner. For example, the fire extinguishing sheet 200 may be located inside the pack case 2100, between the plurality of battery modules 1000 and an upper surface of the pack case 2100, between the plurality of battery modules 1000 and a lower surface of the pack case 2100, between the plurality of battery modules 1000 and a side surface of the pack case 2100, and/or between the plurality of battery modules 1000.

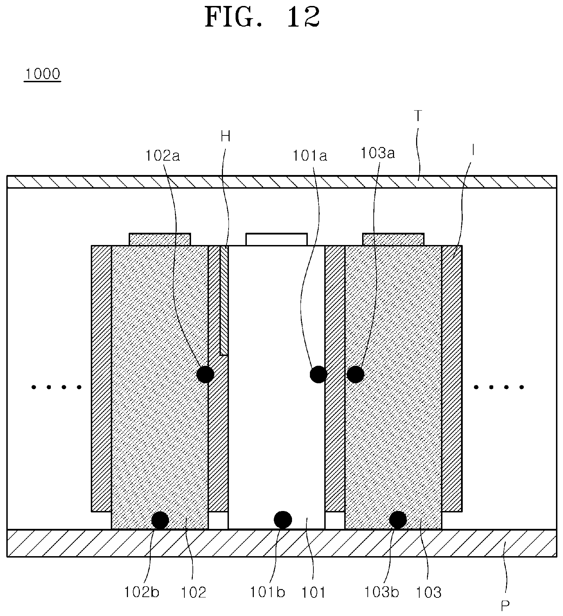

Herein, aspects and effects of the fire extinguishing sheet 200 described with reference to FIGS. 7 to 11 will be described with reference to FIGS. 12 to 14.

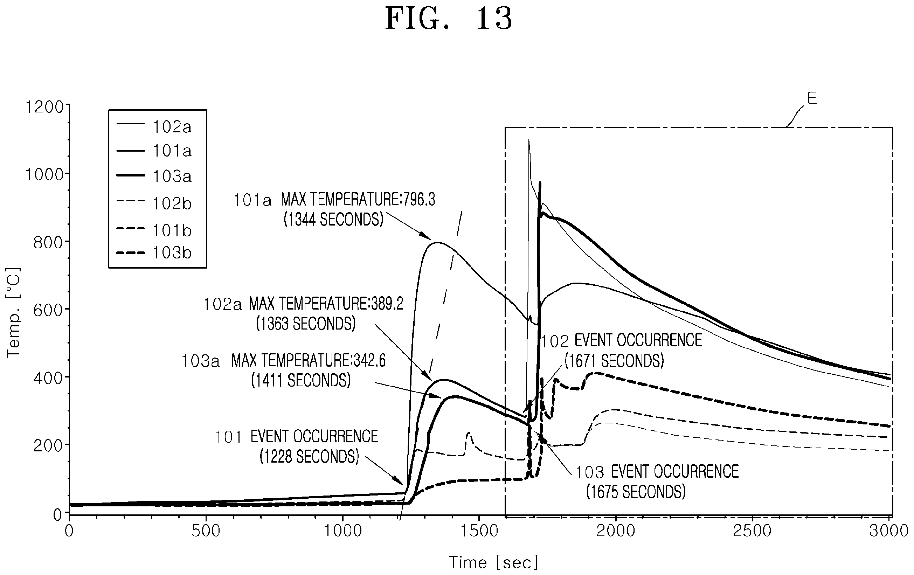

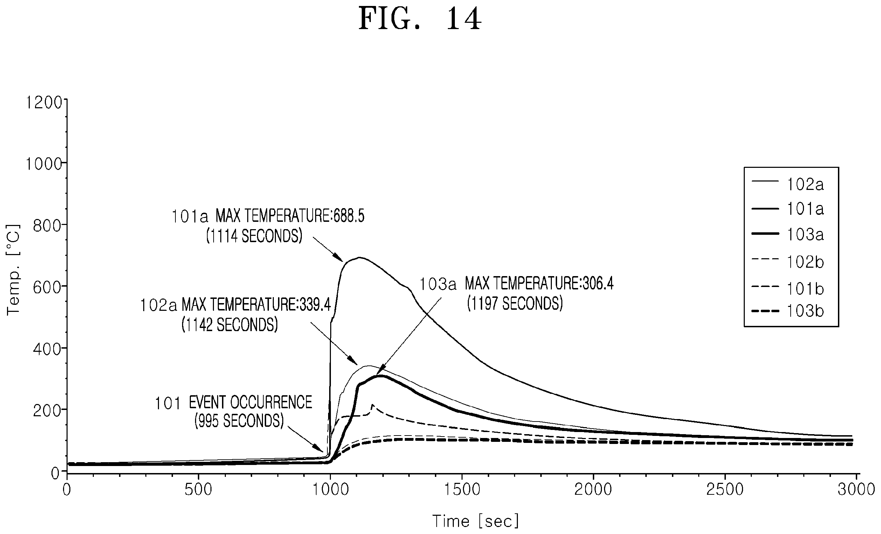

FIG. 12 is a view schematically illustrating a battery module for describing FIGS. 13 and 14.

FIG. 12 illustrates the battery module 1000 and a plurality of battery cells 101, 102, and 103 included in the battery module 1000, according to an embodiment. The battery module 1000 may further include an insulating layer I between the plurality of battery cells 101, 102, and 103.

FIGS. 13 and 14 described below illustrate temperature changes in first to third battery cells 101 to 103 in the battery module 1000 described in FIG. 12 through graphs, if a fire occurs in the first battery cell 101.

The first battery cell 101 may be a battery cell in contact with a heater H, and represents a battery cell from which flames are directly generated. The second battery cell 102 is a battery cell adjacent to the first battery cell 101 and is a battery cell relatively close to the heater H. The third battery cell 103 is a battery cell adjacent to the first battery cell 101. For example, the first battery cell 101 is located between the second battery cell 102 and the third battery cell 103. For example, the third battery cell 103 is relatively distant from the heater H.

The temperatures shown in FIGS. 13 and 14 described below represent temperatures measured at points 101a to 103a respectively on side surfaces of the battery cells and points 101b to 103b respectively on lower surfaces of the battery cells. The point 101a is a point of the side surface of the first battery cell 101 (e.g., the center of the side surface). The point 102a is a point of the side surface of the second battery cell 102 (e.g., the center of the side surface). The point 103a is a point of the side surface of the third battery cell 103 (e.g., the center of the side surface). The point 101b is a point of the lower surface of the first battery cell 101 (e.g., the center of the lower surface). The point 102b is a point of the lower surface of the second battery cell 102 (e.g., the center of the lower surface). The point 103b is a point of the lower surface of the third battery cell 103 (e.g., the center of the lower surface).

FIG. 13 illustrates an example in which the fire extinguishing sheet 200 according to an embodiment is not included; and FIG. 14 illustrates an example in which the fire extinguishing sheet 200 according to an embodiment is included.

The experiments described in FIGS. 13 and 14 were conducted in a state in which the initial temperature of the heater H was 20 °C and a heating rate was 20 °C/min. The fire extinguishing sheet 200 applied in FIG. 14 was located on an upper inner surface of the battery module 1000, i.e., on the top cover T above the first battery cell 101, which was the battery cell from which flames were generated. However, this is merely an example, and, for example, the fire extinguishing sheet 200 may be provided on a cooling plate C, i.e., on a lower inner surface of the battery module 1000. Further, for example, the fire extinguishing sheet 200 may be provided anywhere on the inner surface of the battery module 1000. As described above, the fire extinguishing sheet 200 was applied at, for example, 0.1 g/liter per effective volume, and, accordingly, one fire extinguishing sheet 200 was applied taking into account the effective volume. For example, the fire extinguishing sheet 200 applied in FIG. 14 included a mixture of KNO₃ and KClO₄ and was manufactured to self-ignite and activate at 267 °C.

FIG. 13 is a graph illustrating temperature changes in the plurality of battery cells included in the battery module, if a fire occurs in the battery cells.

Referring to FIG. 13, it can be seen that flames are generated from the first battery cell 101 after the heater H transfers heat to the first battery cell 101 and 1228 seconds have elapsed. The temperature of the first battery cell 101 rises to a maximum temperature after 1344 seconds have elapsed, and, in this case, the maximum temperature of the first battery cell 101 is 796.3 °C.

Referring to FIG. 13, it can be seen that the temperature of the second battery cell 102 rises after flames are generated from the first battery cell 101. The temperature of the second battery cell 102 rises to a maximum temperature after 1363 seconds have elapsed, and, in this case, the maximum temperature of the second battery cell 102 is 389.2 °C.

Referring to FIG. 13, it can be seen that the temperature of the third battery cell 103 rises after flames are generated from the first battery cell 101. The temperature of the third battery cell 103 rises to a maximum temperature after 1411 seconds have elapsed, and, in this case, the maximum temperature of the third battery cell 103 is 342.6 °C.

At this time, as shown in region "E" of FIG. 13, it can be seen that the flames are consecutively generated in the battery cells. After the heater H transfers heat to the first battery cell 101, and 1671 seconds have elapsed, flames are generated from the second battery cell 102. In addition, after the heater H transfers heat to the first battery cell 101, and 1675 seconds have elapsed, flames are generated from the third battery cell 103.

Accordingly, it can be seen that the flames become larger as the temperatures of the first to third battery cells 101 to 103 rise again.

FIG. 14 is a graph illustrating temperature changes in the plurality of battery cells included in the battery module according to an embodiment, if a fire occurs in the battery cell.

Referring to FIG. 14, it can be seen that flames are generated from the first battery cell 101 after the heater H transfers heat to the first battery cell 101 and 995 seconds have elapsed. The temperature of the first battery cell 101 rises to a maximum temperature after 1144 seconds have elapsed, and, in this case, the maximum temperature of the first battery cell 101 is 688.5 °C. It can be seen that this is lower than the maximum temperature of the first battery cell 101 shown in FIG. 13.

Referring to FIG. 14, it can be seen that the temperature of the second battery cell 102 rises after flames are generated from the first battery cell 101. The temperature of the second battery cell 102 rises to a maximum temperature after 1142 seconds have elapsed, and, in this case, the maximum temperature of the second battery cell 102 is 339.4 °C. It can be seen that this is lower than the maximum temperature of the second battery cell 102 shown in FIG. 13.

Referring to FIG. 14, it can be seen that the temperature of the third battery cell 103 rises after flames are generated from the first battery cell 101. The temperature of the third battery cell 103 rises to a maximum temperature after 1197 seconds have elapsed, and, in this case, the maximum temperature of the third battery cell 103 is 306.4 °C. It can be seen that this is lower than the maximum temperature of the third battery cell 103 shown in FIG. 13.

In addition, as shown in FIG. 14, it can be seen that in the battery module 1000 according to an embodiment, the flames are not consecutively generated from the battery cells.

As can be seen by FIGS. 13 and 14, the fire extinguishing sheet 200 according to an embodiment can block the propagation of flames from the first battery cell 101 toward the adjacent battery cells (e.g., 102 and 103) and/or break flames from cascading. In addition, the fire extinguishing sheet 200 according to an embodiment can block flames from being exposed to the outside of the battery module 1000 and/or the battery pack 2000 by breaking the flames from cascading.

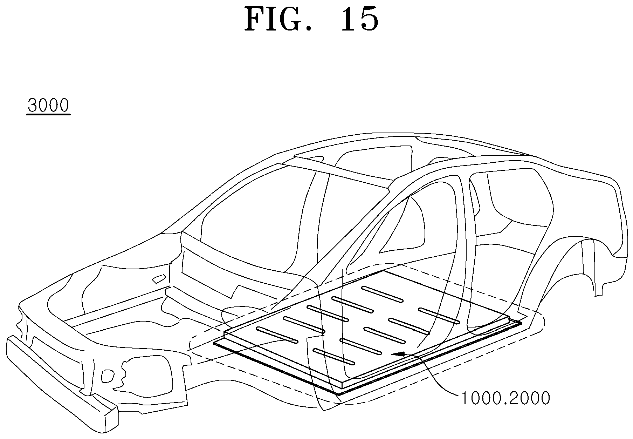

FIG. 15 is a view illustrating a vehicle body and vehicle body parts according to an embodiment.

The battery pack 2000 according to an embodiment described in FIGS. 9 to 14 may be mounted on a vehicle 3000. The vehicle 3000 may be, for example, an electric vehicle, a hybrid vehicle, or a plug-in hybrid vehicle. The vehicle may include a four-wheeled vehicle or a two-wheeled vehicle, for example.

As shown in FIG. 15, the vehicle 3000 according to an embodiment includes the battery module 1000 according to an embodiment and/or the battery pack 2000 including the battery module 1000. The vehicle 3000 operates by receiving power from the battery module 1000 according to an embodiment and/or the battery pack 2000 including the battery module 1000.

A fire extinguishing sheet according to one or more embodiments can be easily attached anywhere inside a battery module and/or a battery pack.

A fire extinguishing sheet, a battery module, and/or a battery pack according to one or more embodiments can block flames generated from a battery cell from being exposed to the outside of the battery module and/or the battery pack.

A fire extinguishing sheet, a battery module, and/or a battery pack according to one or more embodiments can prevent or substantially prevent flames or heat generated from one battery cell from propagating toward other battery cells.

A fire extinguishing sheet, a battery module, and/or a battery pack according to one or more embodiments can break a chain reaction of ignition occurring inside the battery module and/or the battery pack.

However, it will be appreciated by persons skilled in the art that aspects and effects that can be achieved through the present invention are not limited to those described above, and other aspects, effects, and advantages of the present invention will be more clearly understood from the detailed description.

Although some example embodiments of the present invention have been described above, the present invention is not limited thereto, and various modifications can be made within the scope of the claims and the detailed description of the present invention and the accompanying drawings, and it will be apparent that such modifications also belong within the scope of the present invention.

## Claims

1. A fire extinguishing sheet comprising a fire extinguishing layer that comprises a solid aerosol and is configured to release the solid aerosol at temperatures above a reference temperature.

2. The fire extinguishing sheet as claimed in claim 1, wherein the reference temperature is at least 250 °C.

3. The fire extinguishing sheet as claimed in claim 1 or 2, wherein the fire extinguishing layer comprises a potassium compound and is configured to release the potassium compound at temperatures above the reference temperature.

4. The fire extinguishing sheet as claimed in claim 3, wherein the potassium compound comprises at least one selected from the group consisting of potassium nitrate (KNO₃), potassium chlorate (KClO₃), potassium perchlorate (KClO₄), potassium silicate (K₂SiO₃), potassium sulfate (K₂SO₄), and potassium carbonate (K₂CO₃) .

5. The fire extinguishing sheet as claimed in claim 1 or 2, wherein the fire extinguishing layer comprises potassium nitrate (KNO₃) and potassium perchlorate (KClO₄) in a weight ratio of 1:1 to 1:5.

6. The fire extinguishing sheet as claimed in any preceding claim, wherein the fire extinguishing layer further comprises a catalyst configured to promote the release of the solid aerosol.

7. The fire extinguishing sheet as claimed in any preceding claim, wherein the fire extinguishing layer further comprises a coolant configured to cool the solid aerosol.

8. The fire extinguishing sheet as claimed in any preceding claim, further comprising an adhesive layer on at least one surface of the fire extinguishing layer.

9. The battery module as claimed in claim 8, wherein the adhesive layer is configured to attach the fire extinguishing sheet to at least a portion of an inner surface of the housing.

10. The fire extinguishing sheet as claimed in any preceding claim, further comprising a protective layer on at least one side of an outer periphery of the fire extinguishing layer.

11. A battery module comprising:
a plurality of battery cells;
a housing configured to accommodate the plurality of battery cells; and
a fire extinguishing sheet according to any preceding claim in at least a portion inside the housing.

12. A battery pack comprising:
a plurality of battery modules, each being the battery module as claimed in claim 11; and
a pack case in which the plurality of battery modules is accommodated.
